# EUROPÄISCHE PATENTANMELDUNG

(11) **EP 2 683 062 A2**
(43) Veröffentlichungstag der Anmeldung: **08.01.2014**
(21) Anmeldenummer: 13002464.9
(22) Anmeldetag: 08.05.2013
(51) Int. Cl.: H02K 11/00, H02K 26/00

(54) **Winkelbegrenzter Drehmomentmotor zur Betätigung eines hydraulischen Steuerventils in einem Luftfahrzeug**

(30) Priorität: 04.07.2012 DE 102012013265
(71) Anmelder: Liebherr-Aerospace Lindenberg GmbH, 88161 Lindenberg/Allgäu (DE)
(72) Erfinder: Koros, Michael, 88161 Lindenberg (DE); Chilling, Christian, 88161 Lindenberg (DE); Petretti, Albert, 88161 Lindenberg (DE); Gaile, Anton, 8299 Leutkirch (DE); Buhl, Andreas, 87534 Oberstaufen (DE)
(74) Vertreter: Herrmann, Uwe

(57) **Zusammenfassung**

Die Erfindung betrifft einen winkelbegrenzten Drehmomentmotor zur Betätigung eines hydraulischen Steuerventils in einem Luftfahrzeug, wobei der Drehmomentmotor ein Motorgehäuse mit einer darin angeordneten Stator-Rotor-Anordnung aufweist und wenigstens ein Positionssensor zur Drehwinkelerfassung der Motorwelle innerhalb des Motorgehäuses angeordnet ist.

## Beschreibung

Die Erfindung betrifft einen winkelbegrenzten Drehmomentmotor, insbesondere nach Bauart eines Synchronmotors, zur Betätigung eines hydraulischen Steuerventils in einem Luftfahrzeug, wobei der Drehmomentmotor ein Motorgehäuse mit einer darin angeordneten Stator-Rotor-Anordnung aufweist.

Es ist bekannt, elektrische Motoren beliebiger Bauart mit entsprechenden Regelkreisen zu sogenannten Servo- bzw. Stellantrieben zu kombinieren. Diese Antriebe dienen zur Ansteuerung spezieller Maschinen bzw. einzelner Aktoren und zeichnen sich durch eine elektronische Lage-, Geschwindigkeits- oder Momentenregelung aus. Alternativ sind sogenannte drehwinkelbegrenzte Drehmomentmotoren bekannt, bei denen durch ein elektrisch erzeugtes Magnetfeld eine definierte Drehbewegung des Rotors mit begrenztem Drehwinkel bewirkt wird.

Im Flugzeugbau lassen sich hydraulische Steuerventile über Antriebe mit drehwinkelbegrenzten Drehmomentmotoren ansteuern bzw. betätigen. Der tatsächliche Drehwinkel ist jedoch lastabhängig. Zur Lageüberwachung muss der aktuelle Drehwinkel der Motorwelle mittels einer geeigneten Sensorik überwacht und bedarfsweise nachgeregelt werden.

Die US 4,858,60 beschreibt einen derartigen Antrieb, der über einen Drehmomentmotor ein hydraulisches Ventil ansteuert. Für die Lageregelung ist ein externer Positionssensor vorgesehen, der am äußersten Ende der Welle anliegt. Insbesondere wird vorgeschlagen, den Abstand zwischen Drehmomentmotor und Sensorik möglichst groß zu wählen, was jedoch den resultierenden Bauraum und das Gesamtgewicht des gesamten Aufbaus nachteilig beeinflusst. Da sich die Produktionskosten in Relation zur Baugröße bzw. Gewicht berechnen, müssen hier erhebliche Kostennachteile in Kauf genommen werden.

Die Ansteuerung von hydraulischen Steuerventilen bei Flugsteuerungsaktuatoren stellt ein besonders ausfallkritisches Anwendungsgebiet dar, da technische Probleme oftmals fatale Folgen haben können. Aus diesem Grund werden besonders hohe Anforderungen an die Zuverlässigkeit und Sicherheit der verwendeten Komponenten im Flugverkehr gestellt.

Die Aufgabe der vorliegenden Erfindung liegt darin, einen winkelbegrenzten Drehmomentmotor zur Betätigung eines hydraulischen Steuerventils in einem Luftfahrzeug aufzuzeigen, der neben einem optimierten Bauraum zudem eine höhere Betriebszuverlässigkeit aufweist.

Diese Aufgabe wird durch einen winkelbegrenzten Drehmomentmotor gemäß den Merkmalen des Anspruch 1 bzw. des Anspruchs 2 gelöst.

Gemäß Anspruch 1 wird ein Drehmomentmotor mit begrenztem Drehwinkel vorgeschlagen, der zur Betätigung eines hydraulischen Steuerventils in einem Luftfahrzeug geeignet ist. Der Drehmomentmotor weist ein Motorgehäuse mit einer darin angeordneten Stator-Rotor-Anordnung auf. Insbesondere kann der verwendete Drehmomentmotor nach dem Synchronmotorprinzip ausgeführt sein, dessen Rotor vorzugsweise wenigstens einen Permanentmagneten aufweist. Der Rotor weist bevorzugt wenigstens ein, idealer Weise wenigstens zwei permanenteregte Polpaare auf. Der Statoraufbau setzt sich bevorzugt aus wenigstens einer Motorspule bzw. einem Motorspulenpaar zusammen, dass mit Bezug zum Rotor diametral angeordnet ist.

Es ist nunmehr vorgesehen, dass der oder die notwendigen Positionssensoren zur Erfassung des Drehwinkels der Motorwelle nicht wie bisher bekannt außerhalb des Motorgehäuses angeordnet sind, sondern erfindungsgemäß in das Motorgehäuse integriert ist bzw. sind. Hierdurch ergibt sich eine optimale und besonders kleine Bauform des Drehmomentmotors bzw. des gebildeten Antriebs. Darüber hinaus verringert sich das Gesamtgewicht des Drehmomentmotors bzw. des betriebenen Antriebs. Die optimierte Bauform und die resultierende Gewichtsreduktion können zu einer erheblichen Senkung der anfallenden Produktionskosten bei derartigen Drehmomentmotoren bzw. -antrieben führen. Alle elektrischen Komponenten einer Vorsteuergruppe eines Antriebs sind hierdurch in einem einzigen Gehäuse vereint sein.

Die Erfindung betrifft des Weiteren einen Drehmomentmotor mit den Merkmalen gemäß Anspruch 2. Demnach umfasst der Drehmomentmotor ein Motorgehäuse und eine darin angeordnete Stator-Rotor-Anordnung. Insbesondere kann der verwendete Drehmomentmotor nach dem Synchronmotorprinzip ausgeführt sein, dessen Rotor vorzugsweise wenigstens einen Permanentmagneten aufweist. Der Rotor weist bevorzugt wenigstens ein, idealer Weise wenigstens zwei permanenteregte Polpaare auf. Der Statoraufbau setzt sich bevorzugt aus wenigstens einer Motorspule bzw. einem Motorspulenpaar zusammen, dass mit Bezug zum Rotor diametral angeordnet ist.

Erfindungsgemäß weist der Stator des Drehmomentmotors wenigstens zwei Motorspulen auf. Besonders bevorzugt sind zwei, drei oder insgesamt vier Motorspulen bzw. Motorspulenpaare, die jeweils diametral zum Rotor angeordnet vorgesehen sind.

Weiterhin ist erfindungsgemäß vorgesehen, dass wenigstens zwei Motorspulen unabhängig voneinander ansteuerbar sind. Idealerweise sind alle Motorspulen unabhängig voneinander ansteuerbar. Die Anordnung mehrere Motorspulen führt zu einem redundant ausgeführten Stator. Der Ausfall einer Motorspule kann zumindest teilweise bzw. vollständig durch eine weitere Motorspule kompensiert werden. Gleiches gilt für eine Konstruktion mit Motorspulenpaaren. Der Ausfall eines Spulenpaars kann ohne Einschränkung durch ein zusätzliches Spulenpaar, das unabhängig ansteuerbar ist, ausgeglichen werden.

Ferner sind die Motorspulen bzw. Spulenpaare erfindungsgemäß um den Rotorumfang gegeneinander versetzt angeordnet. Diese Bauart vermeidet eine redundanzbedingte Zunahme der Motorbaulänge. Die verfügbaren Platzverhältnisse lassen sich optimal ausschöpfen.

Eine besonders vorteilhafte Ausgestaltung des Drehmomentmotors ergibt sich aus einer Kombination der kennzeichnenden Merkmale des unabhängigen Anspruchs 2 mit dem Anspruch 1. Die vorteilhafte Motorausgestaltung weist wenigstens zwei Motorspulen auf, die unabhängig voneinander steuerbar und um den Umfang des Rotors versetzt zueinander angeordnet sind, und umfasst zudem wenigstens einen Positionssensor zur Drehwinkelerfassung der Motorwelle, der in das Motorgehäuse des Drehmomentmotors integriert ist.

Daraus ergibt sich eine besonders kostengünstige, kleinbauende und gewichtssparende Bauweise, die zudem aufgrund der Redundanzvorkehrungen die hohen Ansprüche für den Einsatz im Flugverkehr erfüllt.

Wenigstens ein Positionssensor kann als RVDT-Sensor oder alternativ als Hall-Sensor ausgeführt sein. Denkbar ist ebenfalls der Einsatz einer Mischkombination aus beiden Sensortypen. Die ergänzende Diversität kann in Kombination mit der Redundanz die Ausfallsicherheit des Drehmomentmotors weiter erhöhen.

Wenigstens ein Positionssensor kann auf einer Motorseite, d.h. rechts oder links neben der Rotor-Stator-Anordnung, angeordnet sein. Vorzugsweise ist beidseitig wenigstens ein Positionssensor angeordnet.

Die Anzahl der verwendeten Positionssensoren erhöht die Ausfallsicherheit des Drehmomentmotors, da jeweils zwei Positionssensoren zueinander redundant ausgeführt sein können.

Vorzugsweise ist ein redundantes Positionssensorpaar verteilt rechts und links neben dem Motor angeordnet. Alternativ können mehrere Positionssensoren jeweils paarweise rechts und bzw. oder links vom Motorumfang angeordnet sein. Ebenso können die Positionssensoren in axialer Motorrichtung hintereinander gestapelt sein.

Ferner können ein oder mehrere Positionssensoren einzeln oder paarweise in direkter Verlängerung der Motorachse innerhalb des Motorgehäuses angebaut sein. In diesem Fall lässt sich insbesondere ein RVDT-Sensor in 360°-Ausführung verwenden.

Eine optimale kurzbauende Bauform des Drehmomentmotors kann vorzugsweise durch die Anordnung ein oder mehrerer Positionssensoren innerhalb des Statordurchmessers erzielt werden. Besonders bevorzugt sind die Positionssensoren einzeln oder paarweise innerhalb des Statordurchmessers angeordnet.

Grundsätzlich gilt, dass die Anordnung des oder der Positionssensoren innerhalb des Motorgehäuses in Abhängigkeit des verwendeten Sensortypus auszuwählen ist. Eine optimale Bauform des Drehmomentmotors ergibt sich durch die Anordnung wenigstens eines bzw. aller Positionssensoren innerhalb des Statordurchmessers. Aufgrund der magnetischen Kopplung zwischen Drehmomentmotor und Sensorik bzw. einzelner Sensoren untereinander kann eine alternative Anordnung in direkter Verlängerung zur Motorachse bzw. rechts, links oder beidseitig am Motorumfang vorzuziehen sein.

Die Gefahr des Verklemmens von Rotor- und Statoreinheit des Drehmomentmotors kann bevorzugt durch eine geeignete Wahl des realen Luftspaltes reduziert werden. Vorzugsweise wird ein realer Luftspalt des Drehmomentmotors von mehr als 0,5 mm vorgesehen, idealer Weise von mehr als 0,7 mm.

Eine analoge Problematik ergibt sich bei gewissen Positionssensortypen, die ebenfalls eine Stator-Rotor-Anordnung aufweisen können. Für diesen Fall wird ein realer Luftspalt innerhalb wenigstens eines Positionssensors von mehr als 0,3 mm, besonders bevorzugt von 0,5 mm vorgeschlagen.

Der theoretische technische Bereich liegt zwischen 0,1 mm und 1,5 mm, der bevorzugte Bereich aufgrund von Anforderungen liegt bei 0,5 mm bis 1,0 mm.

Für besonders ausfallkritische Anwendungen kann die Motorwelle redundant gelagert sein. Insbesondere erfolgt die Lagerung der Motorwelle innerhalb des Drehmomentmotors mittels eines Doppellagers. Für die Gewährleistung der Redundanz ist es wesentlich, dass bei Verklemmen eines Lagers die grundlegende Lagerfunktion aufrechterhalten wird und ein Drehen der Motorwelle sichergestellt ist.

Um das Schadensausmaß eines Spulenbrands soweit wie möglich minimieren zu können, kann es zweckmäßig sein, dass einzelne Windungen im Stator mit Hilfe eines Feuerschutzbleches räumlich voneinander getrennt sind. Alternativ kann es vorgesehen sein, dass wenigstens zwei Wickelköpfe der einzelnen Motorspulen durch ein oder mehrere Feuerschutzbleche räumlich voneinander getrennt sind. Ein Übergreifen eines Spulenbrands auf benachbarte Spulen bzw. Windungen wird dadurch weitestgehend vermieden.

Vorzugsweise ist das Motorgehäuse des Drehmomentmotors aus Titan gefertigt. Das verwendete Titanmaterial weist ideale Eigenschaften bezüglich seines magnetischen Verhaltens und seiner thermischen Ausdehnung auf.

Zudem kann es zweckmäßig sein, dass der Stator des Drehmomentmotors mittels einer Titanummantelung hermetisch abgedichtet ist. Hierdurch kann der Stator vor äußeren Umwelteinflüssen geschützt werden. Zudem lässt sich die Wahrscheinlichkeit für ein Verklemmen der Stator-Rotor-Anordnung im Falle eines Spulenbrands durch die Titanummantelung erheblich reduzieren. Aus der Titanummantelung des Stators ergibt sich ferner die Eignung des Drehmomentmotors als Hochspannungsmotor. Der Aufbau ist bis zu einer minimalen Gleichspannung im Zwischenkreis von 800 V teilentladungssicher.

Da sowohl die Motorfunktion als auch die Sensorfunktion innerhalb des Motorgehäuses integriert sind, besteht die begründete Gefahr für ein Übersprechen zwischen den Motor- und den Sensorkomponenten. Die damit verbundenen magnetischen Störeinflüsse können den Betrieb der Sensorik bzw. des Drehmomentmotors erheblich beeinflussen. Fehlerhafte Positionswerte der Sensorik beeinträchtigen die gesamte Positionsregelung des Drehmomentmotors bzw. -antriebs. Vor diesem Hintergrund muss ein Übersprechen zwischen Motor- und Sensorkomponenten durch gezielte Maßnahmen gedämpft werden. Eine erfolgsversprechende Möglichkeit besteht in einer gezielten Abschirmung bestimmter Motor- bzw. Sensorkomponenten.

Als vorteilhaft erweist es sich, wenn wenigstens ein, besonders bevorzugt alle Wickelköpfe des Drehmomentmotors durch ein aus weichmagnetischem Material bestehendes Gehäuse umgeben sind. Die Materialeigenschaften des verwendeten Gehäuses unterdrücken die von den Wickelköpfen ausgehende magnetische Streuung, die insbesondere den Messprozess der benachbarten Positionssensoren nachteilig beeinflussen kann.

Zudem kann es vorteilhaft sein, dass wenigstens ein Positionssensor bzw. dessen Stator vollständig durch ein Gehäuse umgeben ist. Das Gehäuse ist vorzugsweise aus einem weichmagnetischen Material, insbesondere aus Titan, aufgebaut. Hierdurch werden ebenfalls die von den Statoren der Positonssensoren ausgehenden magnetischen Streuflüsse gedämpft.

Einzelne Positionssensoren bzw. deren Gehäuse können magnetisch über einen Luftspalt oder alternativ über eingeschobene nichtmagnetische Distanzbleche gegenseitig entkoppelt sein. Gleiches gilt für die magnetische Entkopplung zwischen wenigstens einem Sensor und dem Drehmomentmotor bzw. wenigstens einer Motorwicklung oder Wicklungskopfes.

Idealerweise wird eine gegenseitige Isolierung der einzelnen Positionssensoren bzw. deren Rotoren mittels eines weichmagnetischen Schirmbleches erreicht. Dies gilt insbesondere für den Fall, wenn ein oder mehrere Positionssensoren in axialer Richtung gestaffelt angeordnet sind. In diesem Fall wird eine magnetische Entkopplung über das weichmagnetische Schirmblech erreicht.

Die Erfindung betrifft zudem einen Stellantrieb zur Betätigung eines hydraulischen Steuerventils eines Luftfahrzeugs mit einem erfindungsgemäßen winkelbegrenztem Drehmomentmotor bzw. einer vorteilhaften Ausführungsform des erfindungsgemäßen Drehmomentmotors. Der Antrieb umfasst zusätzlich zum Drehmomentmotor die entsprechende Regellogik, um einen positionsgetreuen Betrieb des Drehmomentmotors zu gewährleisten. Die Eigenschaften und Vorteile des erfindungsgemäßen Antriebs entsprechen offensichtlich denen des erfindungsgemäßen Drehmomentmotors, weshalb an dieser Stelle auf eine wiederholende Beschreibung verzichtet wird.

Weitere Vorteile und Einzelheiten der Erfindung werden anhand des in den Figuren dargestellten Ausführungsbeispiels näher erläutert. Es zeigen:
- Figur 1:: eine Schnittdarstellung durch den erfindungsgemäßen winkelbegrenzten Drehmomentmotor in axialer Motorrichtung und
- Figur 2:: eine schematische Statordarstellung des erfindungsgemäßen winkelbegrenzten Drehmomentmotors.

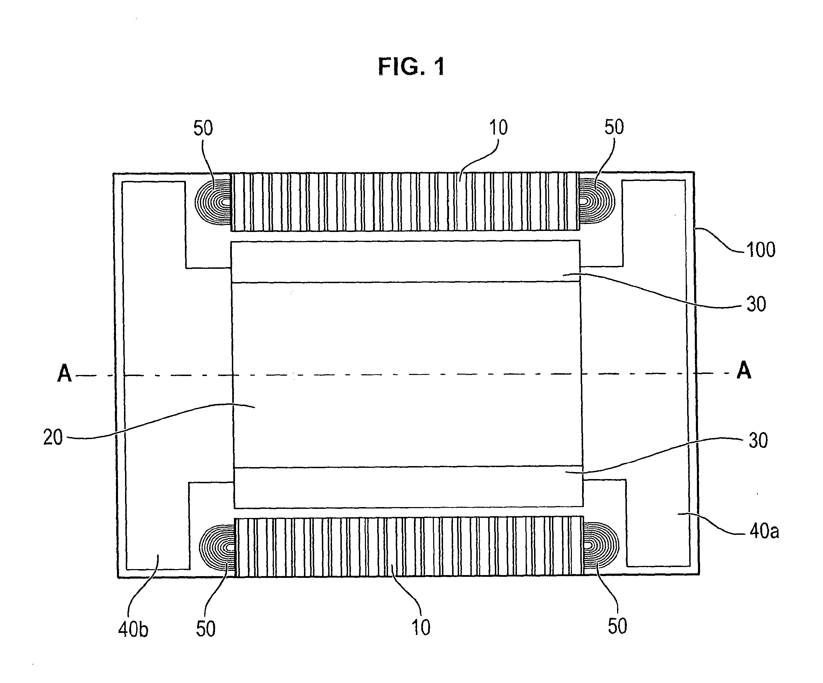

Figur 1 zeigt einen Längsschnitt durch den erfindungsgemäßen Drehmomentmotor entlang seiner Drehachse A-A. Der Drehmomentmotor weist einen Stator 10 sowie einen um die Drehachse A-A rotierbar gelagerten Rotor 20 auf. Die Stator-Rotor-Anordnung ist durch das Motorgehäuse 100 umgeben.

Ein oder mehrere Polpaare des Rotors 20 werden durch die vorgesehenen Permanentmagnete 30 erzeugt. Der Stator 10 weist ein Statorpaket mit mehreren Statorwicklungen 50 auf, um auf Grundlage der magnetischen Wechselwirkung der Rotor-Statoranordnung eine Drehbewegung der Motorwelle hervorzurufen.

Der Motor zeichnet sich durch einen begrenzten Rotordrehwinkel um die Achse A-A aus, wodurch ein hydraulisches Steuerventil eines Flugsteuerungsaktuators positionsgetreu ansteuerbar ist. Zur Regelung des Drehmomentmotors bzw. zur Überwachung der Rotorstellung dient das Positionssensorenpaar 40a, 40b, das erfindungsgemäß direkt in das Gehäuse 100 des Drehmomentmotors integriert ist. Beide Positionssensoren 40a, 40b sind als RVDT-Sensoren ausgeführt und sitzen verteilt auf beiden Motorseiten, d. h. stirnseitig vor dem Stator 10, auf der Motorwelle. Die RVDT-Version umgibt dabei die Welle vollständig, wobei der rotierende Sensorteil fest an der Motorwelle fixiert ist. Das Sensorenpaar ist redundant zueinander ausgeführt, um die Ausfallsicherheit des Drehmomentmotors zu erhöhen.

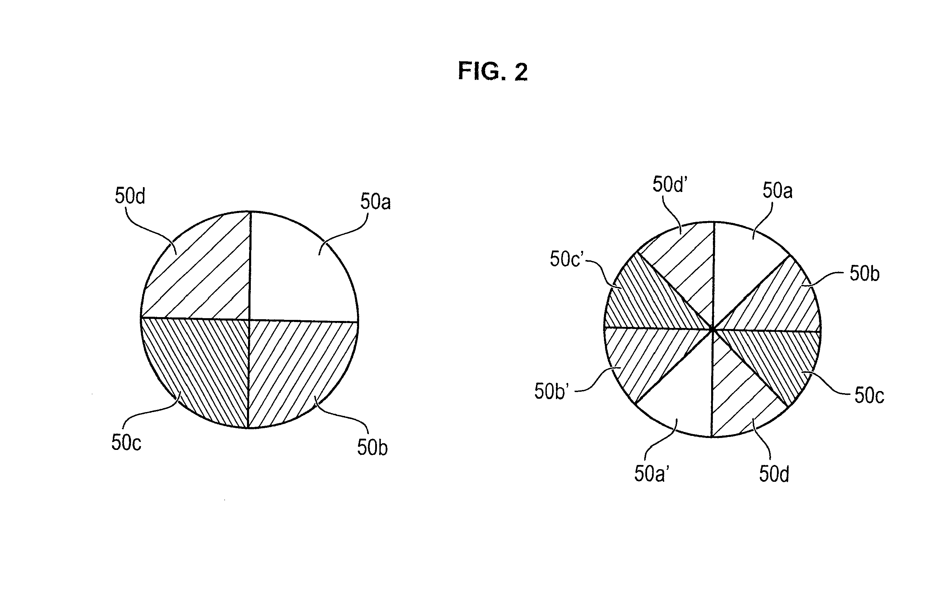

Zur weiteren Steigerung der Ausfallsicherheit des erfindungsgemäßen Drehmomentmotors sind die einzelnen Motorspulen 50 redundant ausgeführt. Die Motorspulen 50 sind dabei in Segmenten angeordnet, wobei jedes Motorsegment in Summe einen Sektor von 360°/n einnimmt, wobei n die Spulenanzahl symbolisiert. Eine schematische Darstellung der Spulenanordnung ist der Figur 2 zu entnehmen. Der Stator weist insgesamt vier Statorspulen 50a, 50b, 50c, 50d auf, die unabhängig voneinander steuerbar sind und bei Bedarf die notwendige Drehbewegung des Rotors 20 erzeugen. Möglich ist ebenfalls eine Konstruktion mit Motorspulenpaaren 50a, 50a',50b, 50b',50c, 50c',50d, 50d', wobei Spulenpaare auf gegenüberliegenden Rotorseiten angeordnet sind. Alle Spulenpaare sind unabhängig ansteuerbar.

Beispielsweise kann vorgesehen sein, dass im Normalfall lediglich Motorspule 50a bzw. das Spulenpaar 50a, 50a' die Drehbewegung erzeugt. Fällt die Spule 50a, 50a' aus, so wird die Funktionalität durch eine der übrigen Motorspulen 50b, 50c, 50d sichergestellt. Alternativ kann selbstverständlich der Parallelbetrieb zwei oder mehrere Spulen 50a, 50b, 50c, 50d denkbar sein, wobei im Fehlerfall stets eine zufriedenstellende Funktionsfähigkeit des Motors gewährleistet ist.

Neben der in Figur 2 gezeigten Anordnung bzw. radialen Anordnung besteht auch die Möglichkeit, die Motorspulen in Längsrichtung redundant anzuordnen.

Analog zur Redundanz der Motorspulen 50 ist ebenfalls der verwendete Positionssensor durch das Sensorpaar 40a, 40b redundant ausgeführt. Pro Pfad ist ein elektrischer unabhängiger Positionssensor vorhanden.

Die Positionssensoren 40a, 40b können alternativ ebenfalls in Segmente analog zu den Motorspulen aufgeteilt werden oder auch in axialer Richtung des Drehmomentmotor gestapelt werden. In diesem Fall würde das Positionssensorpaar 40a, 40b nicht auf gegenüberliegenden Motorseiten angeordnet sein, sondern nacheinander in axialer Richtung auf einer Motorseite.

Insbesondere für die Anwendung des Drehmomentmotors bei Luftfahrzeugen ist die Motorwelle bzw. der Rotor über ein Doppellager gelagert, so dass trotz eines einzelnen Lagerausfalls weiterhin eine drehbare Lagerung sichergestellt ist.

Das Übersprechen vom Stator 10 des Drehmomentmotors zu den Positionssensoren 40a, 40b bzw. zwischen den Sensoren 40a, 40b wird durch eine Abschirmung begrenzt. Hierzu sind alle Wickelköpfe der Motorwicklungen 50 mit einem aus weichmagnetischem Material bestehenden Gehäuse geschützt. Zudem sind die Statoren der Positionssensoren 40a, 40b nahezu vollständig durch ein Titangehäuse umgeben. Magnetische Streuflüsse lassen sich durch diese Maßnahmen ausreichend dämpfen, um einen zufriedenstellenden Betrieb des Drehmomentmotors trotz der stark verkürzten Bauweise zu ereichen.

Der dargestellte Drehmomentmotor zeichnet sich durch einen besonders kurzbauenden Aufbau aus, was insgesamt zu einer deutlichen Platzeinsparung bei Stellantrieben führt. Die damit verbundene Gewichtsreduktion bringt insbesondere beim Einsatz des Antriebs im Luftverkehr entscheidende Vorteile mit sich.

## Patentansprüche

1. Winkelbegrenzter Drehmomentmotor zur Betätigung eines hydraulischen Steuerventils in einem Luftfahrzeug, wobei der Drehmomentmotor ein Motorgehäuse mit einer darin angeordneten Stator-Rotor-Anordnung aufweist,
**dadurch gekennzeichnet,**
**dass** wenigstens ein Positionssensor zur Drehwinkelerfassung der Motorwelle innerhalb des Motorgehäuses angeordnet ist.

2. Winkelbegrenzter Drehmomentmotor zur Betätigung eines hydraulischen Steuerventils in einem Luftfahrzeug, wobei der Drehmomentmotor ein Motorgehäuse und eine darin angeordnete Stator-Rotor-Anordnung aufweist,
**dadurch gekennzeichnet,**
**dass** der Stator des Drehmomentmotors wenigstens zwei oder mehr Motorspulen aufweist, die unabhängig voneinander ansteuerbar sind und um den Rotorumfang gegeneinander versetzt angeordnet sind.

3. Drehmomentmotor gemäß Anspruch 2, **dadurch gekennzeichnet, dass** der Drehmomentmotor die kennzeichnenden Merkmale des Anspruchs 1 umfasst.

4. Drehmomentmotor nach einem der vorhergehenden Ansprüche, **dadurch gekennzeichnet, dass** wenigstens ein Positionssensor als RVDT-Sensor ausgeführt ist.

5. Drehmomentmotor nach einem der vorhergehenden Ansprüche, **dadurch gekennzeichnet, dass** wenigstens ein Positionssensor als Hall-Sensor ausgeführt ist.

6. Drehmomentmotor nach einem der vorhergehenden Ansprüche, **dadurch gekennzeichnet, dass** wenigstens ein oder mehrere Positionssensoren einzeln oder paarweise rechts und/oder links vom Motorumfang angeordnet ist/sind.

7. Drehmomentmotor nach einem der vorhergehenden Ansprüche, **dadurch gekennzeichnet, dass** wenigstens ein oder mehrere Positionssensoren einzeln oder paarweise in direkter Verlängerung der Motorachse angebaut und/oder innerhalb des Statordurchmessers angeordnet ist/sind.

8. Drehmomentmotor nach einem der vorhergehenden Ansprüche, **dadurch gekennzeichnet, dass** der reale Luftspalt in wenigstens einem der Positionssensoren im Bereich von 0,1 mm bis 1,5 mm und vorzugsweise 0,5 mm bis 1,0 mm liegt und vorzugsweise größer oder gleich 0,5 mm ist und/oder der reale Luftspalt wenigstens eines Drehmomentmotors im Bereich von 0,1 mm bis 1,5 mm und vorzugsweise 0,5 mm bis 1,0 mm liegt und vorzugsweise größer oder gleich 0,7 mm ist.

9. Drehmomentmotor nach einem der vorhergehenden Ansprüche, **dadurch gekennzeichnet, dass** der Rotor des Drehmomentmotors redundant gelagert, insbesondere doppelt gelagert ist.

10. Drehmomentmotor nach einem der vorhergehenden Ansprüche, **dadurch gekennzeichnet, dass** das Motorgehäuse aus Titan besteht und/oder der Motorstator mittels einer Titanummantelung hermetisch abgedichtet ist.

11. Drehmomentmotor nach einem der vorhergehenden Ansprüche, **dadurch gekennzeichnet, dass** ein oder mehrere Windungen im Motorstator bzw. ein oder mehrere Wicklungsköpfe der Drehmomentmotorwicklungen durch wenigstens ein Feuerschutzblech räumlich voneinander getrennt sind und/oder durch wenigstens ein aus weichmagnetischen Material gebildetes Gehäuse umgeben ist/sind.

12. Drehmomentmotor nach einem der vorhergehenden Ansprüche, **dadurch gekennzeichnet, dass** wenigstens ein Positionssensor, insbesondere der Stator wenigstens einen Sensors, durch ein Gehäuse aus weichmagnetischen Material und/oder Titan umgeben ist.

13. Drehmomentmotor nach einem der vorhergehenden Ansprüche, **dadurch gekennzeichnet, dass** wenigstens ein Positionssensor mittels wenigstens einem Schirmblech magnetisch von der Motorwicklung entkoppelt und/oder magnetisch und/oder elektrisch von wenigstens einem der übrigen Positionssensoren entkoppelt ist.

14. Drehmomentmotor nach Anspruch 13, **dadurch gekennzeichnet, dass** wenigstens zwei Positionssensoren, insbesondere deren Rotoren, mittels wenigstens einem weichmagnetischen Schirmblech voneinander entkoppelt sind.

15. Drehmomentmotor nach einem der Ansprüche 13 oder 14, **dadurch gekennzeichnet, dass** wenigstens ein Positionssensor und wenigstens eine Motorwicklung des Drehmomentmotors, insbesondere deren Gehäuse, über einen Luftspalt und/oder ein nicht magnetisches Distanzblech voneinander entkoppelt sind.
